# FASCICULE DE BREVET EUROPEEN

(11) **EP 0 461 978 B1**
(45) Date de publication et mention de la délivrance du brevet: **03.05.1995**
(21) Numéro de dépôt: 91401519.3
(22) Date de dépôt: 10.06.1991
(51) Int. Cl.: H04N 7/00

(54) **Dispositif de détection de salves de données numériques récurrentes dans un signal de télévision à multiplex numérique-analogique**
Vorrichtung zur Erkennung von wiederkehrenden digitalen Datapaketen in einem digital/analog-multiplexierten Fernsehsignal
Device for detecting digital data bursts recurring in a digital-analogue multiplexed television signal

(30) Priorité: 13.06.1990 FR 9007356
(43) Date de publication de la demande: 18.12.1991
(73) Titulaire: FRANCE TELECOM, 75015 Paris (FR)
(72) Inventeur: Bouvier, Jacky, F-38240 Meylan (FR); Remy, Michel, F-38400 St Martin d'Heres (FR)
(74) Mandataire: Fort, Jacques

(56) Documents cités:
- EP-A- 0 250 274
- EP-A- 0 396 469
- WO-A-84/02442
- US-A- 4 620 227
- US-A- 4 636 859

## Description

L'invention a pour object un dispositif destiné à détecter, dans un signal de télévision à multiplex numérique-analogique, la salve de données numériques qui se répète au même emplacement à chacune d'une partie au moins des lignes, donc à la fréquence de ligne.

L'invention trouve une application particulièrement importante dans l'isolement des salves numériques, et d'elles seules, d'un multiplex numérique-analogique en ligne, tel que celui constituant un signal de télévision suivant l'une des normes MAC/PAQUETS (normes D2-MAC, D-MAC, HD-MAC).

L'information de synchronisation, constituée par un mot particulier, est insérée dans la salve numérique de chaque ligne utile et dans la ligne 625 d'un signal D-MAC ou D2-MAC. Elle est indispensable pour permettre l'exploitation du signal de télévision. Cette information peut être fortement altérée par les distorsions de transmission, à un point tel qu'il est impossible de reconnaître directement les informations de synchronisation. Des techniques connues, notamment d'égalisation, permettent de corriger les dégradations. Mais l'égalisation ne peut être mise en oeuvre qu'après acquisition rigoureuse des salves de données numériques, car l'égalisation doit se faire à partir des données numériques et d'elles seules.

On connaît déjà WO-A-84 02 442 un dispositif de détection d'une salve de données numériques dans un signal de télévision à multiplex numérique-analogique suivant la norme C-MAC.

Par ailleurs, le document EP-A-0 396 469, publié le 7 novembre 1990, c'est-à-dire postérieurement à la date de priorité de la présente demande, décrit un dispositif de détection d'une salve de données numériques dans un signal de télévision à multiplex numérique-analogique, comportant des moyens de détection des transitions, d'identification de la présence d'un signal MAC/PAQUETS et d'émission d'une impulsion à chaque identification.

L'invention vise à fournir un dispositif permettant de détecter les salves de données numériques récurrentes présentes dans un signal de télévision dont les lignes utiles au moins (c'est-à-dire les lignes contenant un signal vidéo) sont constituées par un multiplex numérique-analogique, ce dispositif étant capable de détecter les salves même dans un signal fortement dégradé. L'invention vise également à fournir un tel dispositif ne mettant en oeuvre que des technologies numériques, donc susceptible d'être réalisé sans difficulté sous forme d'un circuit intégré.

Dans ce but, l'invention utilise le fait que chaque ligne utile contient successivement, et toujours au même emplacement, une salve de données numériques ayant des transitions dont les emplacements correspondent à une fréquence bien déterminée, suivie d'une courte période de clampage où le signal est constant. Le taux des transitions est toujours élevé ; si le codage utilisé risque de donner naissance à des périodes longues sans transition, il est suivi d'un brassage ou d'un codage supplémentaire destiné à recréer des transitions, nécessaires au traitement à la réception.

Dans le cas particulier d'un signal de type D2-MAC/PAQUETS par exemple, les salves numériques présentent, à l'état non dégradé, les caractéristiques suivantes :
- transitions nombreuses à la fréquence de 10,125 MHz entre des niveaux de ±0,4 V,
- niveau de clampage constant, indiquant une valeur de gris, après chaque salve numérique,
- durée constante des salves numériques (10,4 »s dans chaque ligne utile),
- récurrence ininterrompue des salves à la fréquence de ligne pendant toutes celles des lignes d'une trame qui contiennent une partie vidéo.

L'ininterruption de la récurrence de la séquence salves de données-périodes de clampage pendant toute la durée des lignes utiles permet de vérifier qu'une impulsion d'identification a bien été accrochée sur les salves, et non pas sur des séquences situées dans la partie analogique de la ligne et ayant des caractéristiques proches de celles des salves numériques.

L'invention propose, en utilisant les constatations ci-dessus, un dispositif suivant la revendication 1.

L'invention sera mieux comprise à la lecture de la description qui suit d'un mode particulier de réalisation, donné à titre d'exemple non limitatif et destiné à être intégré à un appareil de réception d'un signal de télévision constitué par un multiplex numérique-analogique de type MAC/PAQUETS. La description se réfère aux dessins qui l'accompagnent, dans lesquels :
- la Figure 1 est un schéma synoptique de principe d'un dispositif ;
- la Figure 2 est un diagramme temporel montrant l'échelonnement dans le temps de signaux appliqués au sous-ensemble d'entrée du dispositif de la Figure 1 ;
- la Figure 3 est un diagramme temporel montrant l'emplacement de la fenêtre de salve générée par le dispositif.

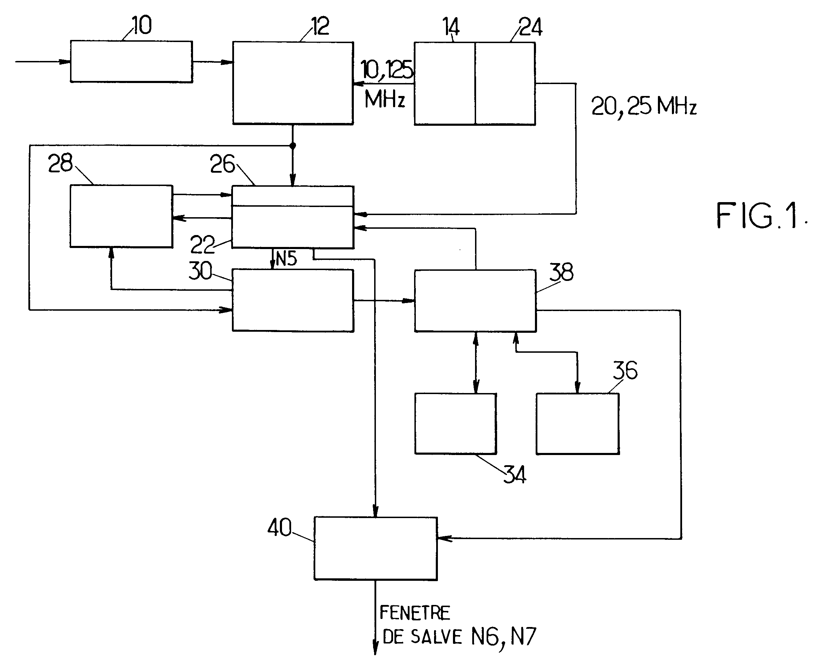

Le dispositif dont le synoptique de principe est montré en Figure 1 est destiné à créer une fenêtre encadrant la salve numérique d'un signal de type MAC/PAQUETS dont une description peut être trouvée dans de nombreux documents. Il sera surtout fait référence par la suite à des signaux du type D2-MAC/PAQUETS décrits dans "Spécification du Système D2-MAC/PAQUETS", Septembre 1985, publiée par Télédiffusion de France. Mais le dispositif décrit est directement transposable au cas de signaux du type D-MAC (dans lesquels la fréquence de bits de la salve numérique est double) ou HD-MAC (dont la trame d'analyse vidéo comporte un nombre de lignes doublé).

Le dispositif dont le synoptique de principe est donné en Figure 1 comprend un sous-ensemble d'entrée destiné à détecter les configurations de signal susceptibles de représenter la succession d'une salve de données, ayant un taux de transitions important, et d'une période de clampage courte (1 »s dans le cas de la norme D2-MAC/PAQUETS) pendant laquelle le signal est constant et correspond à un niveau de gris.

Ce sous-ensemble d'entrée comporte un détecteur de transitions 10 qui reçoit le signal démodulé, en bande de base. Il est constitué d'un filtre passe-haut dont la fréquence de coupure est d'environ 1,5 MHz dans le cas du D2-MAC et de comparateurs à deux seuils qui reçoivent le signal filtré et fournissent, sur la sortie du détecteur 10, une impulsion à chaque transition montante ou descendante d'amplitude dépassant les seuils.

Les impulsions ainsi obtenues, indiquant chacune une transition, sont appliquées à l'entrée d'un détecteur de fin de salve 12, constitué par des portes et par des compteurs émettant un signal de débordement lorsque leur contenu atteint ou dépasse une valeur déterminée.

Le détecteur 12 est piloté par une horloge 14 fournissant en permanence un signal de période T1 (T1 étant la période de bits dans la salve de données), qui n'est pas nécessairement synchrone du signal de données.

L'horloge 14 peut en conséquence être indépendante et il n'est pas indispensable d'extraire préalablement l'horloge du signal de télévision MAC/PAQUETS.

Le détecteur de fin de salve 12 identifie :
- la salve numérique par la présence d'une période N1 T1 pendant laquelle se produisent les transitions dont l'intervalle ne dépasse pas N2 T2, N2 étant choisi en fonction du nombre maximum de périodes de bits sans transitions dans la salve, ce nombre maximum pouvant être soit fixé par la norme, soit choisi en fonction de résultats expérimentaux ;
- la période de clampage (constituée par un palier de gris), par l'absence de transitions pendant une durée dépassant une valeur prédéterminée N3 T1, choisie en fonction de la durée de cette période de clampage (1 »s dans le cas du D2-MAC.

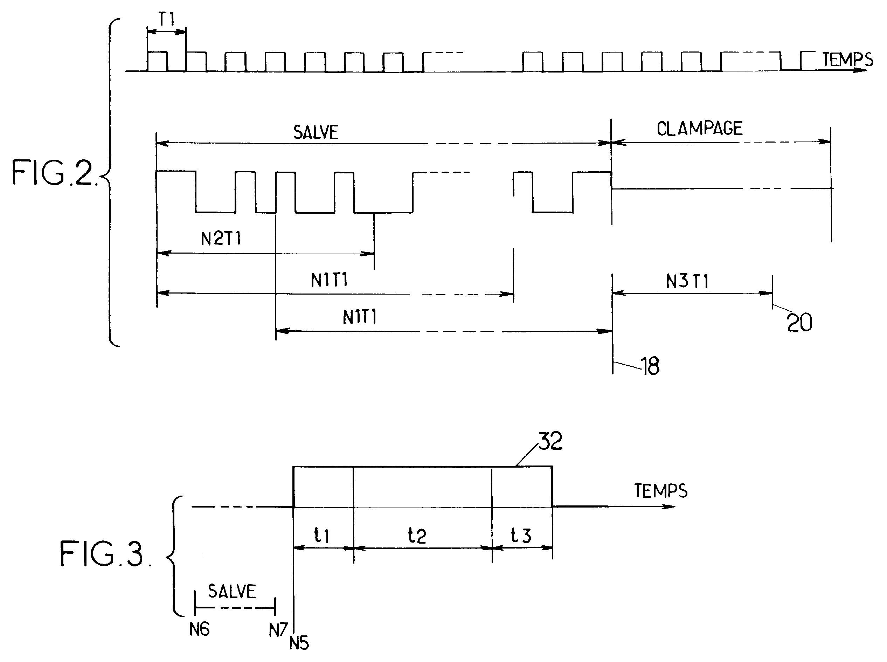

Comme le montre la Figure 2, où la première ligne indique le signal d'horloge à période T1 et la seconde ligne un exemple représentatif de transitions identifiées par le détecteur de transitions 10, la fin 18 de la salve de données est décelable par la présence, en succession, d'une période N1 T1 et d'une période N3 T1.

Le détecteur de fin de salve 12 peut comporter un premier compteur qui s'incrémente à la fréquence d'horloge 1/T1 dès que deux transitions successives séparées de moins de N2 T1 ont été recues par le détecteur 12, revient à zéro dès que la durée N2 T1 est dépassée avant l'arrivée d'une nouvelle transition et maintient un signal de sortie à partir du moment où son contenu atteint N1. Pour un choix approprié de N1, ce premier compteur commence à fournir un signal de sortie un peu avant que ne se termine une salve de données. Un second compteur, destiné à identifier la période de clampage, peut être prévu pour être validé aussi longtemps que le signal de sortie du premier compteur existe, s'incrémenter alors à la fréquence d'horloge 1/T1 en l'absence de transition, revenir à zéro pour chaque transition et fournir un signal de débordement dès que son contenu atteint une valeur N3. L'homme de métier n'a aucune difficulté à réaliser un tel détecteur 12 et, en conséquence, ce dernier ne sera pas davantage décrit.

Le signal de débordement du second compteur est émis à un instant 20 (Figure 2), c'est-à-dire avec un retard égal à N3 T1 par rapport à la fin 18 de la salve de données.

Les divers paramètres peuvent être ajustables pour tenir compte des conditions de réception, étant donné qu'ils constituent des compromis tenant compte des perturbations du signal, provoquées notamment par le bruit et les échos. A titre d'exemple, on peut indiquer que les choix ci-après ont donné de bons résultats dans des conditions de réception normales :
- N1 T1 :: 90% environ de la durée des salves (c'est-à-dire environ 9,36 »s, soit N1 d'environ 95) ;
- N3 T1 :: 50% environ de la durée des périodes de clampage (ce qui correspond à N3 = 5 pour des périodes de 1 »s et à une fréquence d'horloge 14 de 10,125 MHz).

D'autres valeurs pourraient être adoptées pour tenir compte des conditions réelles de réception.

Le signal de débordement du second compteur est transformé, dans le détecteur de fin de salve 12, en une impulsion I qui constitue un signal de sortie du sous-ensemble d'entrée. Ce sous-ensemble fait un premier tri de rejet des transitions rencontrées dans la partie vidéo de chaque ligne utile, susceptibles d'être confondues avec des transitions de données.

Le sous-ensemble d'entrée est suivi d'un sous-ensemble de sécurisation, destiné à vérifier que la séquence caractéristique de fin de salve se répète bien à l'intérieur de fenêtres temporelles successives de durée courte, se succédant à la période de ligne sur au moins une trame (avec éventuellement des interruptions dues à la présence des suppressions de trame).

Le sous-ensemble de sécurisation montré en Figure 1 comporte un compteur 22 dont l'entrée d'incrémentation reçoit un signal d'horloge 24 à fréquence double de la fréquence d'horloge 14 (par exemple 20,25 MHz au lieu de 10,125 MHz) et dont l'entrée de validation de comptage reçoit les impulsions I par l'intermédiaire d'une porte 26. La porte 26 est passante au repos et elle transmet en conséquence la première impulsion I qu'elle reçoit. Le compteur 22 commence alors à s'incrémenter et, en même temps, provoque le blocage de la porte 26 par un circuit 28, de façon à arrêter les impulsions I suivantes qui se produisent avant qu'une période de ligne ne se soit presque entièrement écoulée. Les impulsions ainsi écartées peuvent aussi bien représenter de véritables séquences (dans le cas où la première impulsion I est due à une séquence ressemblant à celles à détecter) que des séquences dont la ressemblance avec la séquence à détecter est fortuite. Lorsque le contenu du compteur 22 atteint une valeur N5, qui correspond à une durée N5 T1/2 légèrement inférieure à la période de ligne, par exemple égale à (64 - 0,4) »s, un signal de débordement est émis par le compteur 22 vers un générateur 30 de fenêtre courte qui, en réponse :
- commande le circuit 28 pour remettre à zéro le compteur 22 et autoriser à nouveau la transmission au compteur d'une impulsion I arrivant pendant la durée de la fenêtre, et donc l'incrémentation du compteur à la fréquence 1/2T1 ;
- détecte l'instant d'apparition de l'impulsion I suivante dans la fenêtre temporelle courte.

Comme le montre la Figure 3, divers cas peuvent se présenter.
(a) Aucune impulsion n'est détectée pendant la durée de la fenêtre courte 32, ce qui indique l'absence des séquences caractéristiques (cette absence pouvant être due soit à une première détection erronée, soit parce qu'il s'agissait de la ligne 625 d'une trame vidéo de type MAC ou similaire).
(b) Une impulsion I est détectée dans la partie amont t1 de la fenêtre courte 32, ce qui indique que la fenêtre est en retard.
(c) Une impulsion I est détectée pendant la partie centrale t2 de la fenêtre courte, ce qui indique que cette dernière est bien centrée.
(d) Une impulsion I est détectée pendant la partie finale t3 de la fenêtre, ce qui indique que la fenêtre est en retard.

Le générateur de fenêtre courte 30 est associé à une logique d'asservissement 38 qui réagit à chacun de ces cas de façon différente.

Dans le cas (a), elle incrémente d'une unité un compteur d'infirmation 34.

Dans les cas (b), (c) et (d), elle envoie un signal de remise à zéro au compteur d'infirmation 34 et incrémente un compteur d'affirmation 36.

De plus, dans les cas (b) et (d), la logique, suivant le cas, diminue d'une unité le cycle du compteur 22 ( qui passe à N5-1 s'il était égal à N5 ) ou l'augmente d'une unité.

Le compteur 22 fournit également, à un générateur de fenêtre de salve 40, des tops d'ouverture de fenêtre lorsque son contenu est N6, de fermeture lorsque son contenu est N7. N6 et N7 sont choisis pour que la fenêtre ainsi formée encadre la salve de données. Le générateur 40 peut être constitué par une simple bascule RS suivie d'une porte dont le rôle apparaîtra plus loin.

Le rôle de la logique 38 et des compteurs 34 et 36 est d'éliminer les fausses fenêtres éventuelles et de provoquer une reprise de la recherche en cas d'élimination. La logique 38 valide la porte de sortie du générateur 40 uniquement :
- si le compteur 36 a totalisé au moins N8 affirmations, N8 étant choisi à une valeur supérieure au nombre de lignes utiles d'une trame ;
- sans qu'il y ait eu, à un moment quelconque avant que N8 ne soit atteint, N9 infirmations successives totalisées par le compteur 34, donc sans interruption par une affirmation.

Pour cela, si le contenu du compteur 34 atteint N9, la logique 38 maintient inhibée la porte de sortie du générateur de fenêtre de salve 40, force à zéro le contenu du compteur 22 pour provoquer une nouvelle recherche et valide en permanence la porte 26 jusqu'à réception d'une nouvelle impulsion I, ce qui initialise une nouvelle recherche d'impulsions I se reproduisant de façon cyclique à la fréquence de ligne.

Dans le cas d'un signal de télévision suivant la norme D2-MAC, on peut choisir pour N8 une valeur comprise entre 320 et 1000 et, pour N9, une valeur égale à la moitié du nombre de lignes de suppression de trame. Les durées t1, t2 et t3 peuvent par exemple être égales à 200 ns, 400 ns et 200 ns.

L'ensemble des fonctions définies ci-dessus peuvent être facilement intégrées sur silicium, par exemple en technologie CMOS, en n'exigeant qu'une très faible surface de semiconducteur. Le dispositif est aisément adaptable à toute modification des normes et peut comporter des moyens de mémorisation des divers paramètres, adjustables ou non en fonction de caractéristiques locales.

## Revendications

1. Dispositif de détection d'une salve de données numériques dans un signal de télévision à multiplex numérique-analogique, l'emplacement de ladite salve de données numériques se répétant au même emplacement à chacune d'une partie au moins des lignes et ladite salve étant suivie d'une période de signal constant,
caractérisé en ce qu'il comporte :
- des premiers moyens (12) de détection des transitions; d'identification de la présence d'une séquence comprenant successivement une période de durée égale à au moins N1 T1 pendant laquelle sont présentes des transitions espacées d'au plus N2 T1 et une période d'une durée au moins égale à N3 T1 sans transition, T1 étant un intervalle de temps déterminé, du même ordre de grandeur que la période de bits des données, N1, N2 et N3 étant des nombres entiers prédéterminés, N1 étant très supérieur à N2, et N3 T1 étant inférieur à la durée d'une période sans transition; et d'émission d'une impulsion à chaque identification,
- des seconds moyens (22-40) de validation par comptage des impulsions émises chacune au cours d'une fenêtre temporelle calée sur la première impulsion, pendant une durée supérieure à celle des lignes utiles d'une trame et vérification que le nombre des impulsions est supérieur à une valeur prédéterminée.

2. Dispositif selon la revendication 1, caractérisé en ce que les seconds moyens sont prévus pour vérifier que le nombre des absences d'impulsions ne dépasse pas une valeur prédéterminée.

3. Dispositif selon la revendication 1 ou 2, caractérisé en ce que les moyens (12) de détection de séquence comprennent un compteur incrémenté à la fréquence d'une horloge à fréquence 1/T1 dès que deux transitions successives séparées de moins de N2 T1 ont été reçues et ramené à zéro dès que la durée N2 T1 est dépassée avant l'arrivée d'une nouvelle transition, et un second compteur validé aussi longtemps que le contenu du premier compteur atteint ou dépasse N1, qui s'incrémente à la fréquence d'horloge en l'absence de transition, revient à zéro à chaque transition et fournit un signal de débordement lorsque son contenu atteint N3.

4. Dispositif selon la revendication 1, 2 ou 3, caractérisé en ce que N1 est choisi de façon que N1 T1 soit égal à 90% environ de la durée d'une salve.

5. Dispositif selon l'une quelconque des revendications précédentes, caractérisé en ce que N3 est choisi de façon que N3 T1 représente 50% environ de la durée des périodes de clampage du signal.

6. Dispositif selon l'une quelconque des revendications précédentes, caractérisé en ce que les moyens de validation des impulsions comprennent un compteur (22) ayant une entrée d'incrémentation qui reçoit un signal d'horloge et une entrée de validation de comptage qui reçoit lesdites impulsions par l'intermédiaire d'une porte (26), passante au repos et bloquée à partir de la réception d'une première impulsion et jusqu'à ce que se soit écoulé un temps légèrement inférieur à la fréquence de ligne.

7. Dispositif selon la revendication 6, caractérisé en ce que les moyens de validation sont prévus pour que le comptage revienne à zéro si le nombre des absences d'impulsions successives à la période de répétition de ligne dépasse une valeur prédéterminée.

8. Dispositif selon la revendication 5 ou 6, caractérisé en ce que les moyens de validation comportent un générateur (30) de fenêtre courte associé à une logique d'asservissement (38), un compteur d'affirmations (36) qui est incrémenté à chaque présence d'une impulsion dans la fenêtre courte, et un compteur d'infirmations (34) qui est incrémenté à chaque absence d'impulsion pendant la fenêtre courte et qui est remis à zéro à chaque présence d'une impulsion pendant la fenêtre, ladite logique fournissant un signal de validation lorsque le contenu du compteur d'affirmations atteint une valeur prédéterminée sans que le contenu du compteur d'infirmations ait atteint une autre valeur prédéterminée.

9. Dispositif selon la revendication 8, caractérisé en ce que les moyens de validation comportent un générateur (40) de fenêtre de salve recevant un top d'ouverture du compteur (22) lorsque le contenu de ce dernier atteint une valeur déterminée et un top de fermeture lorsque le contenu du compteur atteint une autre valeur, ledit générateur comportant une porte de sortie commandée par la logique d'asservissement (38).

10. Dispositif selon la revendication 8 ou 9, caractérisé en ce que le compteur (22) est muni d'une entrée de commande de durée de cycle incrémentable et décrémentable par la logique d'asservissement (38) en fonction de l'emplacement d'apparition de l'impulsion I dans la fenêtre courte.

## Patentansprüche

1. Vorrichtung zur Erfassung eines digitalen Datenpakets in einem digital/analog-multiplexierten Fernsehsignal, wobei sich die Stelle des digitalen Datenpakets an der gleichen Stelle in jeder Zeile von wenigstens einem Teil der Zeilen wiederholt und das Paket von einer Periode mit konstantem Signal gefolgt ist,
**dadurch gekennzeichnet**,
daß sie umfaßt:
- erste Mittel (12) zur Erfassung der Übergänge; zur Identifikation der Anwesenheit einer Sequenz, welche aufeinanderfolgend eine Periode mit einer Zeitdauer von wenigstens N1 T1, während der Übergänge mit einem Abstand von höchstens N2 T2 auftreten, und eine Periode mit einer Zeitdauer von wenigstens N3 T1 ohne Übergang umfaßt, wobei T1 ein bestimmtes Zeitintervall von der Größenordnung der Periode der Datenbits ist, N1, N2 und N3 vorbestimmte ganze Zahlen sind, N1 sehr viel größer als N2 ist und N3 T1 kleiner ist als die Zeitdauer einer Periode ohne Übergang; und zur Emission eines Impulses bei jeder Identifikation,
- zweite Mittel (22-40) zur Freigabe durch Zählung der jeweils während eines auf den ersten Impuls eingestellten zeitlichen Fensters emittierten Impulse während einer Zeitdauer, welche größer ist als diejenige der Nutzzeilen eines Teilbilds, und Überprüfung, ob die Anzahl der Impulse größer ist als ein vorbestimmter Wert.

2. Vorrichtung nach Anspruch 1,
**dadurch gekennzeichnet**,
daß die zweiten Mittel dazu vorgesehen sind, zu überprüfen, daß die Anzahl der Impulsabwesenheiten einen vorbestimmten Wert nicht übersteigt.

3. Vorrichtung nach Anspruch 1 oder 2,
**dadurch gekennzeichnet**,
daß die Mittel (12) zur Erfassung der Sequenz einen Zähler umfassen, welcher mit der Frequenz eines Taktgebers der Frequenz 1/T1 inkrementiert wird, sobald zwei aufeinanderfolgende, um weniger als N2 T1 getrennte Übergänge empfangen worden sind, und auf Null zurückgebracht wird, sobald die Zeitdauer N2 T1 vor dem Auftreten eines neuen Übergangs überschritten ist, und einen zweiten Zähler, welcher solange freigegeben ist, solange der Inhalt des ersten Zählers N1 erreicht oder übersteigt, welcher sich mit der Taktgeberfrequenz bei der Abwesenheit von Übergängen inkrementiert, bei jedem Übergang auf Null zurückkehrt und ein Überlaufsignal liefert, wenn sein Inhalt N3 erreicht.

4. Vorrichtung nach Anspruch 1, 2 oder 3,
**dadurch gekennzeichnet**,
daß N1 derart gewählt ist, daß N1 T1 ungefähr 90 % der Zeitdauer eines Pakets ist.

5. Vorrichtung nach einem der vorhergehenden Ansprüche,
**dadurch gekennzeichnet**,
daß N3 derart gewählt ist, daß N3 T1 ungefähr 50 % der Zeitdauer der Klemmperiode des Signals entspricht.

6. Vorrichtung nach einem der vorhergehenden Ansprüche,
**dadurch gekennzeichnet**,
daß die Mittel zur Freigabe der Impulse einen Zähler (22) umfassen, welcher einen ein Taktgebersignal empfangenden Inkrementierungseingang und einen die Impulse über ein Gatter (26) empfangenden Zählfreigabeeingang aufweist, wobei das Gatter im Ruhezustand durchlässig ist und ab dem Empfang eines ersten Impulses und bis zum Ablauf einer Zeit gesperrt ist, welche geringfügig kleiner ist als die Zeilenfrequenz.

7. Vorrichtung nach Anspruch 6,
**dadurch gekennzeichnet**,
daß die Mittel zur Freigabe dazu vorgesehen sind, daß die Zählung auf Null zurückkehrt, falls die Anzahl der mit der Zeilenwiederholungsperiode aufeinanderfolgenden Abwesenheiten der Impulse einen vorbestimmten Wert übersteigt.

8. Vorrichtung nach Anspruch 5 oder 6,
**dadurch gekennzeichnet**,
daß die Mittel zur Freigabe einen mit einer Steuerungslogik (38) verbundenen Generator (30) für kurze Fenster, einen bei jeder Anwesenheit eines Impulses in dem kurzen Fenster inkrementierten Bestätigungszähler (36) und einen Aufhebungszähler (34) umfaßt, welcher bei jeder Abwesenheit eines Impulses während des kurzen Fensters inkrementiert wird und bei jeder Anwesenheit eines Impulses während des Fensters auf Null zurückgebracht wird, wobei die Logik ein Freigabesignal liefert, wenn der Inhalt des Bestätigungszählers einen vorbestimmten Wert erreicht, ohne daß der Inhalt des Aufhebungszählers einen weiteren vorbestimmten Wert erreicht hätte.

9. Vorrichtung nach Anspruch 8,
**dadurch gekennzeichnet**,
daß die Mittel zur Freigabe einen Paketfenstergenerator (40) umfassen, welcher ein Öffnungssynchronsignal des Zählers (22) empfängt, wenn der Inhalt dieses letzteren einen bestimmten Wert erreicht, und ein Schließsynchronsignal, wenn der Inhalt des Zählers einen anderen Wert erreicht, wobei der Generator ein von der Steuerungslogik (38) gesteuertes Ausgangsgatter umfaßt.

10. Vorrichtung nach Anspruch 8 oder 9,
**dadurch gekennzeichnet**,
daß der Zähler (22) einen Eingang zum Steuern der Zeitdauer des von der Steuerungslogik (38) in Abhängigkeit von der Stelle des Auftretens des Impulses I in dem kurzen Fenster inkrementierbaren und dekrementierbaren Zyklus aufweist.

## Claims

1. A system for detecting a digital data burst in a digital-analog multiplex television signal, the position of said digital data burst being repeated at the same location at each of at least some of the lines and the said burst being followed by a constant signal period,
characterised in that it comprises:
- first means (12) for detecting transitions; for identification of the presence of a sequence comprising successively a period of duration equal to at least N1 T1 during which there are present transitions spaced by N2 T1 at the maximum and a period of a duration at least equal to N3 T1 without transition, T1 being a given interval of time, of the same order of magnitude as the period of the data bits, N1, N2 and N3 being predetermined integers, N1 being very much greater than N2, and N3 T1 being less than the duration of a period without transition; and for emission of a pulse on each identification,
- second means (22 - 40) for enabling by counting the pulses each emitted during a time window locked on the first pulse, for a duration greater than that of the useful lines of a frame and verification that the number of pulses is greater than a predetermined value.

2. A system according to claim 1, characterised in that the second means are adapted to verify that the number of pulse absences does not exceed a predetermined value.

3. A system according to claim 1 or 2, characterised in that the sequence detection means (12) comprise an counter incremented at the frequency of a clock of frequency 1/T1 as soon as two successive transitions separated by less than N2 T1 have been received and reset to zero as soon as the duration N2 T1 is exceeded before the arrival of a new transition, and a second counter enabled for as long as the contents of the first counter reach or exceed N1, which is incremented at the clock frequency in the absence of a transition, returns to zero on each transition, and delivers an overflow signal when its contents reach N3.

4. A system according to claim 1, 2 or 3, characterised in that N1 is so selected that N1 T1 is equal to approximately 90% of the duration of a burst.

5. A system according to any one of the preceding claims, characterised in that N3 is so selected that N3 T1 represents approximately 50% of the duration of the signal clamping periods.

6. A system according to any one of the preceding claims, characterised in that the pulse enabling means comprise a counter (22) having an incrementation input which receives a clock signal and a counting enabling input which receives the said pulses through the agency of a gate (26), which conducts at rest and which is cut off on receipt of a first pulse and until a time slightly less than the line frequency has elapsed.

7. A system according to claim 6, characterised in that the enabling means are adapted to reset counting to zero if the number of successive pulses absences at the line repetition frequency exceeds a predetermined value.

8. A system according to claim 5 or 6, characterised in that the enabling means comprise a short window generator (30) associated with a control logic (38), an affirmation counter (36) which is incremented on each pulse presence in the short window, and a non-affirmation counter (34) which is incremented on each pulse absence during the short window and which is reset to zero on each pulse presence during the window, said logic delivering an enable signal when the contents of the affirmation counter reach a predetermined value without the contents of the non-affirmation counter having reached another predetermined value.

9. A system according to claim 8, characterised in that the enabling means comprise a burst window generator (40) receiving an opening pulse from the counter (22) when the contents of the latter reaches a given value and a closure pulse when the contents of the counter reaches another value, said generator comprising an output gate controlled by the control logic (38).

10. A system according to claim 8 or 9, characterised in that the counter (22) is provided with a cycle time control input which is incrementable and decrementable by the control logic (38) in dependence on the position at which the pulse (I) appears in the short window.
